## Europäisches Patentamt
## European Patent Office
## Office européen des brevets

(19)

(11) Veröffentlichungsnummer: **0 204 012**
**B1**

(12) # EUROPÄISCHE PATENTSCHRIFT

(45) Veröffentlichungstag der Patentschrift:
14.12.88

(21) Anmeldenummer: 85106699.3

(22) Anmeldetag: 30.05.85

(51) Int. Cl.⁴: **A 23 G 1/04,** A 23 G 1/18,
A 23 G 1/10

(54) Verfahren und Vorrichtung zur Herstellung von Schokoladenmassen, Kuvertüre, Fettglasuren u.dgl.

(43) Veröffentlichungstag der Anmeldung:
10.12.86 Patentblatt 86/50

(45) Bekanntmachung des Hinweises auf die Patenterteilung:
14.12.88 Patentblatt 88/50

(84) Benannte Vertragsstaaten:
BE CH DE FR GB IT LI LU NL

(56) Entgegenhaltungen:
DE-A-1 945 615
DE-A-2 614 237
DE-A-3 111 352
DE-A-3 202 929
FR-A-929 856
FR-A-2 222 020
FR-A-2 303 484
GB-A-2 066 642
US-A-3 904 777

(73) Patentinhaber: F.B. LEHMANN Maschinenfabrik
GmbH, Daimlerstrasse 12, D-7080 Aalen (DE)

(72) Erfinder: Maggioni, Ernesto, Residenza Poggio 662,
I-20090 Segrate - Milano 2 (IT)

(74) Vertreter: Kern, Wolfgang Dipl.- Ing.,
Patentanwälte Kern, Brehm & Partner Albert-
Rosshaupter- Strasse 73, D-8000 München 70 (DE)

LIBER, STOCKHOLM 1988

EP 0 204 012 B1

**Beschreibung**

Die Erfindung betrifft ein Verfahren sowie eine Vorrichtung zur Herstellung von Schokoladenmassen, Kuvertüre, Fettglasuren u.dgl. gemäß dem Oberbegriff des Anspruchs 1.

Bei einem bekannten Verfahren dieser Art (DE-OS-3 202 929) wird die aus Kristallzucker, Kakaomasse oder Kakaopulver, vegetabilem Fett, Milchpulver u.dgl. bestehende, vorzerkleinerte und vorgemische Prozeßmasse im Kreislauf mehrmals einem Zerkleinerungsvorgang unterworfen, unter Rühren durch eine Vorratszone gefördert und durch Einwirkung hoher Scherkräfte in eine dünne Schicht ausgebreitet, um in diesem Zustand mit einem gasförmigen Austauschmittel in Berührung gebracht zu werden. Der Zerkleinerungsvorgang ist dabei zweistufig, indem die Prozeßmasse nacheinander in Rührwerkskugelmühlen gemahlen und daraufhin in einer Walzwerksmühle gewalzt wird. Letztere wird also schon deshalb als für den Verfeinerungs- und Veredelungsprozeß unverzichtbar gehalten, weil bei dieser Verfahrensweise die Prozeßmasse nach dem Vermahlen, Walzen und Entgasen in einem Mischer aufgefangen wird, aus dem ständig ein Teil wieder in den Ausgangsbehälter zurückgepumpt wird, in dem sich die vorgemischte Prozeßmasse befindet. Dadurch erfolgt ständig eine Vermischung des Endproduktes oder der teilweise verarbeiteten Prozeßmasse mit der unverarbeiteten, vorgemischten Prozeßmasse, so daß angenommen werden kann, daß selbst am Ende des Herstellungsvorganges noch ein gewisser Anteil an nicht vollständig bearbeitetem Produkt im Endprodukt vorhanden ist.

Die mit dem bekannten Verfahren und der zu seiner Durchführung dienenden Vorrichtung angeblich erzielten Vorteile des geringeren Zeitaufwandes beim Conchieren und der Energieersparnis aufgrund der Reihenschaltung beim Vermahlen der Prozeßmasse auf einer Mahleinrichtung und einer Walzeinrichtung werden somit zumindest durch den oben genannten Nachteil des ständigen Vermischens des Endprodukts mit dem Ausgangsprodukt wieder aufgehoben, indem das Endprodukt möglicherweise den qualitativ gestellten Anforderungen nicht entspricht. Des weiteren ist der apparatetechnische Aufwand durch die Notwendigkeit zweier Zerkleinerungseinrichtungen beträchtlich und jedenfalls größer als bei Anlagen, die ohne Walzeinrichtungen arbeiten.

Zur Vermeidung der oben genannten Nachteile und zur Verringerung des apparatetechnischen Aufwandes bei der Herstellung eines qualitativ hochwertigeren Endproduktes wurde nun vorgeschlagen, die Prozeßmasse nach dem Vormischen chargenweise zu vermahlen und durch einen Dünnschichtentgasungsreaktor zu fördern, in dem sie ausgebreitet und entgast wird, um sie daraufhin in einem Homogenisator zu homogenisieren und bis zur vollständigen Leerung des Vormischers ohne Rücklauf zu letzterem zu speichern. Zu diesem Zweck wurde apparatetechnisch die Zerkleinerungseinrichtung mit nachgeschalteter Ausbreit- und Entgasungseinrichtung für die Prozeßmasse so ausgebildet, daß sie wenigstens eine Rührwerksmühle aufweist und die Ausbreit- und Entgasungseinrichtung ein säulenförmiger Dünnschichtentgasungsreaktor mit einem Rotor mit Düsenöffnungen zur gleichmäßigen Verteilung und Beaufschlagung der Prozeßmasse mit Heißluft sein soll, wobei sich an den Dünnschichtentgasungsreaktor ein Homogenisator zur Homogenisierung und Speicherung der Prozeßmasse anschließt, der mit einem Rührwerk versehen ist sowie mit einem Ausgang für die homogenisierte Prozeßmasse (europäische Patentanmeldung 84 108 603.6).

Es hat sich nun gezeigt, daß bei dieser vorgeschlagenen Verfahrensweise bei vielen verarbeiteten Produkten eine unzureichende Viskosität erhalten wird, so daß verlangt wurde, das Verfahren und die dazugehörige Vorrichtung zwecks Erlangung der jeweils gewünschten Viskosität des Endproduktes zu verbessern.

Die Lösung dieser Aufgabe besteht, was den verfahrenstechnischen Teil anbelangt, darin, die Prozeßmasse, nachdem sie vorgemischt und chargenweise vermahlt und anschliessend durch den Dünnschichtentgasungsreaktor gefördert wurde, zur Senkung ihrer Viskosität zunächst durch einen auf sie sehr hohe Scherkräfte übertragenden Verflüssiger zu schicken und danach in einem Homogenisator zu homogenisieren und bis zur vollständigen Entlehrung des Vormischers ohne Rücklauf zu letzterem zu speichern.

Zu diesem Zweck dient apparatetechnisch nicht nur wie bei der vorgeschlagenen Vorrichtung eine aus einer Rührwerksmühle bestehende Zerkleinerungseinrichtung, der als Ausbreit- und Entgasungseinrichtung ein säulenförmiger Dünnschichtentgasungsreaktor mit einem mit Düsenöffnungen zur gleichmäßigen Verteilung und Beaufschlagung der Prozeßmasse mit Heißluft versehenen Rotor nachgeschaltet ist, sondern hinter dem Dünnschichtentgasungsreaktor ein Verflüssiger zur Senkung der Viskosität der Prozeßmasse, der aus einem Rohr mit innenliegendem Rotor besteht, welcher mit Stiften bestückt und sehr hoher Drehzahl antreibbar ist. An diesen Verflüssiger schließt sich ein Homogenisator zur Homogenisierung und Speicherung der Prozeßmasse an, der mit einem Rührwerk versehen ist sowie mit einem Ausgang für die homogenisierte Prozeßmasse.

Durch die erfindungsgemäße Verfahrensweise wird eine Vermischung der gemahlenen und entgasten Prozeßmasse mit der nur vorgemischten und sonst unbehandelten Prozeßmasse vermieden und dadurch, daß die Entgasung in einem Dünnschichtentgasungsreaktor durchgeführt wird, die Produktmasse in einer Weise vorveredelt, die die Verwendung eines Walzenstuhls in Verbindung mit den bekannten Rührwerkskugelmühlen als Mahlvorrichtung überflüssig macht. Zur Einstellung der Viskosität der Prozeßmasse dient dabei ein hinter den Dünnschichtentgasungsreaktor geschalteter Verflüssiger der oben bezeichneten Art, mit Hilfe dessen die gewünschte Viskositätssenkung der Prozeßmasse erreicht wird.

Dem der Zerkleinerung nachgeschalteten Dünnschichtentgasungsreaktor kommt insofern verfahrenswesentliche Bedeutung zu, als sein Rotor die Produktmasse nicht nur zu einer dünnen Schicht auf der Reaktorwandung ausbreitet, sondern ständig erneutert und mit aus dem Rotor austretenden Heißluftstrahlen beaufschlagt. Dadurch wird nicht nur eine sehr starke Vergrößerung der Oberfläche der Produktmasse für den Entgasungsvorgang sichergestellt, sondern auch ein intensiver Wärme- und Stoffaustausch, da die aus dem Rotor ausströmende Heißluft, die auch durch ein Reaktionsgas ersetzt werden könnte, auf diese Weise fein verteilt in die wie ein Film ausgebreitete Produktmasse eingeblasen wird und dieser Produktmassenfilm dadurch, daß er in dem senkrechten Reaktor von oben nach unten wandert, eine Verweilzeit aufweist, die zu einer wesentlich besseren Veredelung der Produktmasse führt als bei dem herkömmlichen Conchieren.

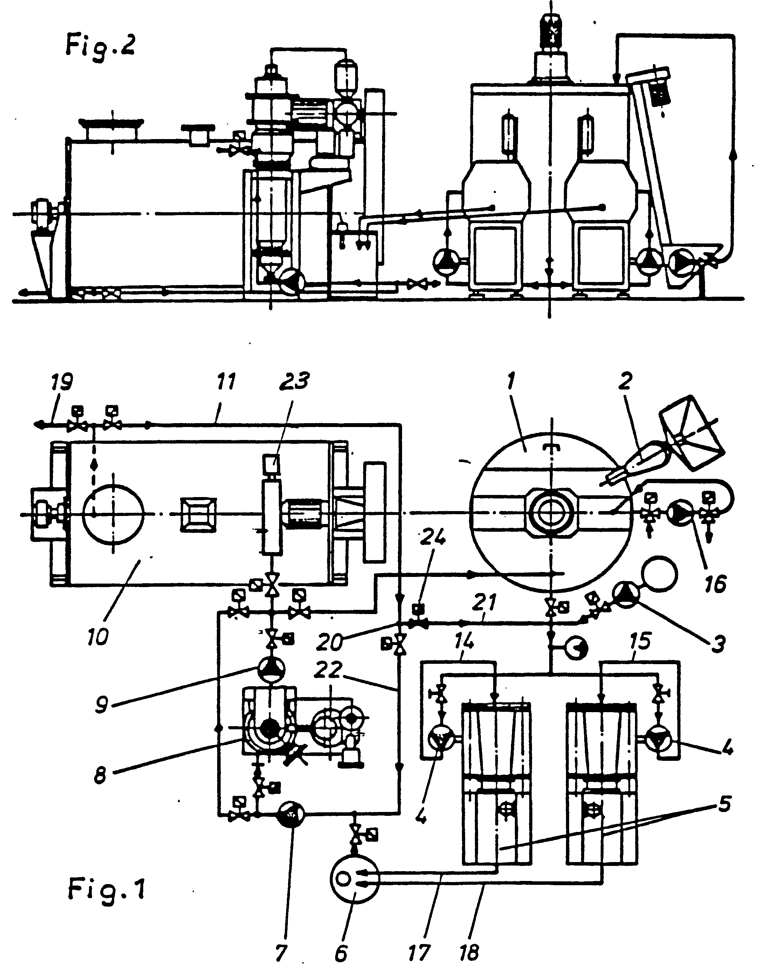

Die Erfindung wird nachfolgend anhand eines Fließschemas der erfindungsgemäßen Vorrichtung in Draufsicht (Fig. 1) und in Vorderansicht (Fig. 2) beispielshalber näher erläutert.

Wie aus den Zeichnungsfiguren ersichtlich, weist die Vorrichtung einen als Vorratsbehälter dienenden Vormischer 1 auf, der zur Aufnahme der Bestandteile, wie Kakaomasse und/oder Kakaopulver, Kakaobutter, vegetabilem Fett, Milchpulver, Kristallzucker u.dgl. dient, aus denen sich die Prozeßmasse zusammensetzt, die eine Schokoladenmasse, Kuvertüre, Fettglasur, Überzugsmasse u.dgl. bildet. Dieser Vormischer weist ein Fassungsvermögen von beispielsweise 5000 kg bei einem spezifischen Gewicht von 1,2 kg/dm$^3$ auf und besitzt Rührorgane zum Vermischen der genannten Bestandteile.

Die Beschickung des Vormischers geschieht mit Hilfe einer Förderschnecke 2 mit Produktaufgabekasten, deren Leistung bei einem spezifischen Gewicht von 1,2 kg/dm$^3$ ca. 1200 kg/h beträgt. Eine an den Vormischer angeschlossene beheizte Ringleitung 16 mit eingebauter Förderpumpe dient zur Umwälzung der Produktmasse beim Mischvorgang.

Durch eine Dosieranlage 3 läßt sich in den aus dem Vormischer 1 austretenden Produktmassenstrom Lezithin eindosieren. Dieser Massenstrom wird danach mit Hilfe von in die Zufuhrleitungen 14, 15 eingebauten Zuführpumpen 4 zwei parallel geschalteten, horizontalen Rührwerkskugelmühlen 5,5 zugeleitet, in denen er vermahlen wird. Diese Mühlen entsprechen bekannter Bauart und weisen eine Mahlgutabtrennung durch ein auf die Rührwelle aufgestecktes Spaltsieb mit großer, offener Siebdurchgangsfläche auf, das durch Rotation sich selbst reinigt. Der Mahlgutabfluß erfolgt durch die Rührwelle. In den konischen, doppelwandigen Mahlbehältern sind auf die Rührwelle aufgesteckte, mit Flügeln versehene Rührscheiben angeordnet.

Nach dem Vermahlen tritt die Prozeßmasse durch die Leitungen 17 und 18 in einen gemeinsamen Auffangbehälter 6 und wird von dort mit Hilfe einer Zuführpumpe 7 in den Dünnschichtentgasungsreaktor 8 gefördert.

Dieser Reaktor weist eine doppelwandige, warmwasserbeheizte Säule auf und ist auf einen Betriebsdruck von maximal 5,5 bar ausgelegt. In ihm befindet sich ein senkrechter mit Düsenöffnungen zur gleichmäßigen Beaufschlagung der Produktmasse mit Heißluft von z. B. 80°C versehener Rotor. Die Heißluft wird durch ein Heißluftgebläse zugeführt.

Der Dünnschichtentgasungsreaktor breitet auf seiner zylindrischen inneren Oberfläche die eintretende Produktmasse in einer dünnen Schicht aus, die von oben nach unten abfließt und dabei mit den Heißluftstrahlen beaufschlagt wird. Die über die Produktschichtoberfläche gleitenden Rotorarme bereiten die Oberfläche ständig neu auf, so daß eine wirksame Entgasung stattfindet.

Die in dem Reaktor behandelte Produktmasse wird mit Hilfe der Zufuhrpumpe 9 einem Verflüssiger 23 zugeführt, bestehend aus einem Rohr mit innenliegendem Rotor, der mit Stiften bestückt ist und mit sehr hoher Drehzahl umläuft und dabei über statische Bolzen an dem Rohr befestigt ist. Dadurch werden sehr hohe Scherkräfte auf die durchfließende Produktmasse übertragen, die zu einer starken Reduzierung ihrer Viskosität führen. Somit läßt sich mit Hilfe des Verflüssigers die Viskosität in der Produktmasse vor deren Eintritt in den Homogenisator 10 einstellen. Der Homogenisator dient zur Homogenisierung der fertigen Schokoladenmasse oder sonstigen Masse und weist mit 5000 kg bei einem spezifischen Gewicht von 1,2 kg/dm$^3$ ein Fassungsvermögen auf, das ebenso groß ist wie dasjenige des Vormischers 1. Der Homogenisator 10 ist ebenfalls mit einem Rührorgan versehen und besitzt eine Produktmasenaustrittsleitung 19 sowie eine Produktmassenrückführleitung 11 für einen Massennebenstrom, die bei 20 in einen zu den Rührwerkskugelmühlen zurückführenden Leitungsstrang 21 und einen zum Dünnschichtentgasungsreaktor 8 über die Zuführpumpe 7 zurückführenden Leitungsstrang 22 aufgeteilt ist.

Zu den oben beschriebenen Einrichtungen gehören auch ein hier nicht näher erläuterter elektrischer Schalt- und Überwachungsschrank 13.

Es versteht sich, daß alle erwähnten Produktmassenförderleitungen an geeigneten Stellen mit geeigneten Ventilen versehen sind, so daß insbesondere die im folgenden beschriebenen Verfahrensvarianten betrieben werden können. Die Prozeßmasse wird aus dem Vormischer 1 in die Rührwerksmühlen 5 gefördert. Daraufhin findet in diesen Mühlen die Vermahlung auf ein gewünschtes Kornspektrum statt. Danach wird die vermahlene Prozeßmasse durch den Dünnschichtentgasungsreaktor 8 in den Homogenisator 10 gefördert und dort gespeichert bzw. homogenisiert. Dieser Vorgang wiederholt sich solange, bis der Vormischer leer ist und sich die gesamte Produktmasse im Homogenisator befindet.

Falls das Endprodukt weiter vermahlen und veredelt werden soll, wird die Produktmasse vom Homogenisator 10 zu den Rührwerksmühlen zurückgepumpt, um einer weiteren Vermahlung ausgesetzt zu werden, die dann ebenfalls chargenweise stattfindet, wobei das jeweils vermahlene Produkt wiederum durch den Dünnschichtentgasungsreaktor 8 in den Vormischer 1 gelangt. Ein weiterer Mahlgang würde dann zum Homogenisator führen.

Andererseits läßt sich, falls das Korngrößenspektrum des im Homogenisator 10 befindlichen Endprodukts der gewünschten Qualität entspricht, jedoch eine weitere Entgasung und Verarbeitung des Produktes im Dünnschichtentgasungsreaktor 8 erforderlich erscheint, dieses Endprodukt nach Schließung des Ventils 24 in der Prozeßmassenrückführleitung 21 nur durch die Leitung 22 mit Hilfe der Pumpe 7 wieder in den Reaktor 8 einspeisen, um von dort in den Homogenisator zurückzukehren.

**Patentansprüche**

1. Verfahren zur Herstellung von Schokoladenmassen, Kuvertüre, Fettglasuren u. dgl., bei dem eine Prozeßmasse aus Kakaomasse und/oder Kakaopulver, Kakaobutter, vegetabilem Fett, Milchpulver, Kristallzucker u. dgl. vorgemischt und wenigstens einem Zerkleinerer zugeführt und in einer dünnen Schicht ausgebreitet und mit einem Gas in Stoff- und/oder Wärmeaustauschberührung gebracht wird, dadurch gekennzeichnet, daß die Prozeßmasse nach dem Vormischen chargenweise vermahlen und durch einen Dünnschichtentgasungsreaktor gefördert wird, in dem sie ausgebreitet und entgast wird, woraufhin sie zur Senkung ihrer Viskosität durch einen auf sie sehr hohe Scherkräfte übertragenden Verflüssiger geschickt wird und danach in einem Homogenisator homogenisiert und bis zur vollständigen Entleerung des Vormischers ohne Rücklauf zu letzterem gespeichert wird.

2. Vorrichtung zur Durchführung des Verfahrens nach Anspruch 1, mit einem Vorratsbehälter für die Prozeßmasse und wenigstens einer sich daran anschließenden Zerkleinerungseinrichtung mit nachgeschalteter Ausbreit- und Entgasungseinrichtung für die Prozeßmasse, dadurch gekennzeichnet, daß die Zerkleinerungseinrichtung wenigstens eine Rührwerkmühle (5) ist und die Ausbreit- und Entgasungseinrichtung ein säulenförmiger Dünnschichtentgasungsreaktor (8) mit einem Rotor mit Düsenöffnungen zur gleichmäßigen Verteilung und Beaufschlagung der Prozeßmasse mit Heißluft ist, und daß sich an den Dünnschichtentgasungsreaktor ein Verflüssiger (23) zur Senkung der Viskosität der Prozeßmasse anschließt, die aus einem Rohr mit innenliegendem Rotor besteht, welcher mit Stiften bestückt und mit sehr hoher Drehzahl antreibbar ist, sowie ein Homogenisator (10) zur Homogenisierung und Speicherung der Prozeßmasse anschließt, wobei letzterer mit einem Rührwerk versehen ist sowie mit einem Ausgang für die homogenisierte Prozeßmasse.

**Claims**

1. A process of making chocolate stock, coatings, icings and the like, in which a process stock composed of cocoa mass and/or cocoa powder, cocoa butter, vegetable fat, milk powder, granulated sugar and the like is premixed and fed to at least one grinding unit and spread to form a thin film and brought into mass and/or heat exchange contact with a gas, characterised in that the process stock after premixing is ground in batches and fed through a thin-film deaerating reactor in which it is spread and deaerated, whereafter it is passed through a liquefier in which very high shearing forces are transmitted to the stock to reduce the viscosity thereof, and is then homogenized in a homogenizer and stored therein without being returned to the pre-mixer until the latter is completely emptied.

2. An apparatus for performing the process as claimed in claim 1, comprising a storage container for the process stock and at least one grinding unit succeeding said container and a stock spreading and deaerating unit downstream thereof, characterised in that the grinding unit is at least an agitated mill (5) and the spreading and deaerating unit is a columnar thin-film deaerating reactor (8) including a rotor having nozzle orifices for the uniform distribution and application of heated air to the process stock, and that a liquefier (23) is disposed downstream of the thin-film deaerating reactor for reducing the stock viscosity, said liquefier being constituted by a pipe with an internal rotor having pins mounted thereon and being driven at very high speed, said liquefier being succeeded by a homogenizer (10) for homogenizing and storing the process stock, said homogenizer being provided with a stirrer and with discharge means for the homogenized process stock.

## Revendications

1. Procédé de fabrication de pâtes de chocolats, de couvertures, de glaçages gras et similaires, dans lequel une pâte à traiter, composée de pâte ou de poudre de cacao, de beurre de cacao, de graisse végétale, de lait en poudre, de sucre cristallisé et autres produits similaires, est prémélangée et acheminée vers au moins un broyeur, étalée en une couche mince et mise en contact avec un gaz assurant un transfert de matière et/ou un échange thermique, caractérisé en ce que la pâte, une fois prémélangée est broyée par lots et est conduite dans un réacteur de dégazage en couches minces (8) dans lequel elle est étalée et dégazée, après quoi, pour abasser sa viscosité, elle est conduite dans un fluidificateur (23) qui lui transmet des forces de cisaillement trés élevées, puis elle est homogénéisée dans un homogénéisateur (10) et y est stockée jusqu'à vacuité complète du pre-mélangeur (1), sans retour vers celui-ci.

2. Dispositif pour la mise en oeuvre du procédé selon la revendication 1, comprenant un résrevoir de stockage pour la pâte et au moins un équipement de concassage relié à ce réservoir, avec en aval, un équipement d'étalement et de dégazage de la pâte, caractérisé en ce que l'équipement de dégazage est constitué d'au moins un broyeur-agitateur (5) et que l'équipement d'étalement et de dégazage se compose d'un réacteur de dégazage en couches minces en forme de colonne (8) comportant un rotor pourvu de gicleurs pour une distribution et une ventilation uniformes de la pâte à l'aide d'air chaud et en ce que le réacteur de dégazage en couches mines est raccordé à un fluidificateur (23) pour diminution de la viscosité de la pâte, lequel fluidificateur comprend un tube avec rotor interne, garni de broches et pouvant être entraîné à trés grande vitesse de rotation, ainsi qu'à un homogénéisateur (10) pour homogénéisation et stockage de la pâte, ce dernier étant doté d'un agitateur et d'une sortie pour la pâte à traiter homogénéisée.

**Fig.2**

**Fig.1**